(19) Europäisches Patentamt

European Patent Office

Office européen des brevets

(11) Publication number: **0 524 411 A1**

## (12) EUROPEAN PATENT APPLICATION

(21) Application number: **92109746.5**

(22) Date of filing: **10.06.92**

(51) Int. Cl.⁵: **A01N 43/78**, //(A01N43/78, 25:00,47:04,47:38,37:46,43:78, 47:26)

(30) Priority: **24.07.91 EP 91112390**

(43) Date of publication of application:
**27.01.93 Bulletin 93/04**

(84) Designated Contracting States:
**AT BE CH DE DK ES FR GB GR IT LI NL PT SE**

(71) Applicant: **F.HOFFMANN-LA ROCHE & CO. AKTIENGESELLSCHAFT**
**Postfach 3255**
**CH-4002 Basel(CH)**

(72) Inventor: **Liniger, Andres**
**10 Lärchenstrasse**
**CH-4124 Münchenstein(CH)**
Inventor: **März, Ulrich**
**4 Nikolaus Singeisenweg**
**W-7860 Schopfheim(DE)**

(74) Representative: **Urech, Peter, Dr. et al**
**Grenzacherstrasse 124 Postfach 3255**
**CH-4002 Basel(CH)**

(54) **Seed treatment.**

(57) The invention concerns products and procedures for increasing plant growth and yield using micronized thiamine (Vitamine B1, aneurine)-salts (A) in formulated forms for the seed treatment, alone or in combination with non-bactericidal fungicides (B), preferably of the thiurame and phtalide type, e.g for synergizing the fungicidal effect of these fungicides.

EP 0 524 411 A1

The invention concerns products and procedures for increasing plant growth and yield using micronized thiamine (Vitamine B1, aneurine)-salts (A) in formulated forms for the seed treatment, alone or in combination with non-bactericidal fungicides (B), preferably of the thiurame and phtalide type, e.g for synergizing the fungicidal effect of these fungicides.

Since long the plant growth stimulating effect of thiamine has been discussed in the relevant scientific literature, especially whether externally applied thiamine to crops is of any importance at all, taking into account that healthy plant leaves synthesize thiamine on their own. A young plant can suffer from avitaminosis, if its leaves do not develop sufficient vitamin $B_1$ or if environmental conditions are unfavourable. Results of experiments are frequently contradictory: plant growth and yield increasing effects cannot be repeated, they are controversial.

These observed, frequently unrepeatable effects can be attributed to three main factors:

1. The use of particular thiamine salts may even be inappropriate for plants and soil microbes in the rhizosphere:

Many experiments have been carried out with various salts of thiamine: Mononitrate, sulfate, hydrochloride, bromide and even precursors of thiamine synthesis, such as thiothiamine. Somewhat consistent and repeatable results have only rarely been obtained.

2. The use of coarse, crystalline thiamine, or commercially available salts do not allow a consistent and homogenous coverage of the seeds.

Commercially available thiamine salts usually contain large crystals which are unsuitable for the homogenous coverage of the seeds at the low dosages being necessary. Such homogeneous coverage is, however, a must, in order to reach the reproducible effects achieved by the present invention. The actual quantity loaded onto the seed is highly random and may vary from zero to ultrahigh dosages, and large crystals are less likely to adhere to the seeds in the soil environment.

3. Experimental designs and evaluations did not sufficiently consider environmental conditions.

The environmental conditions under which the application of thiamine consistently produces plant growth and yield increasing effects correlate with those conditions under which seed treating fungicides do also show their maximum effects on plants. These are: cold and wet weather, poor nutritional status of the plants, low seed quality and poor soils, as occurring worldwide, which are not ideal for emergence and early plant growth. Under these conditions, the novel agents act additively or even synergistically with seed-treating fungicides and support and enhance the effect of the fungicides.

It has now been found, that grounded and micronized, thiamine salts formulated in a suitable seed dressing application form, as, e.g. outlined in Table 1 and applied as seed dressing agents stimulate and improve germination, emergence, early plant growth, root and shoot biomass development and increases the yield of annual agronomic crops, in particular those based on seeds multiplication, such as cereals, legumes, oil crops, cotton, potatoes and sugarbeets and horticultural crops, such as lettuce and tomato, etc..

This effect is in particular synergized with any commercially available seed treating fungicides against pathogenic fungi, preferably of the phtalimide type, e.g. captan (N-trichlormethylthio-tetrahydrophtalimide), the alaninate and metalaxyl type, e.g. metalaxyl (DL-N-(2,6-dimethylphenyl)-N-(2'methoxyacetyl)alanin-methylester, the thiuram sulfide and thiocarbamoyl type, e.g. thiram (tetramethyl-thiuramdisulfid), the benzimidazol type, e.g. the benomyl type, e.g. benomyl (methyl-1-(butylcarbamoyl)-2-benzimidazolcarbamat or thiobendazol (2-(4-thiazolyl)-benzimidazol), which do not harm other microbes in the rhizosphere of the plants, such as bacteria.

Thus, the invention is based on the fact, that applying a seed treating agent comprising thiamine salt(s), in micronized form, optionally containing the commercially available (formulations of) fungicides of the above specified types increases the effect of the fungicide against pathogenic soil- and seed-borne fungi in such a way, that plants treated with such mixtures show a higher germination and emergence rate and ultimate stand, a faster root and shoot growth, a higher root and shoot biomass and a higher fruit (seed, grain and biomass) yield, than when treated with the fungicide alone. The novel seed treating agent comprising thiamine salt(s) alone already shows an effect in such a way, that germination and emergence, early plant growth, root and shoot development, root and shoot biomass and yield are increased. This increase is achieved with component A alone when strong fungi incidences do not occur and induced by A + B, when there is a prononced incidence of pathogenic fungi in the soil.

Considering, that a large proportion of the above specified agronomic crops is regularly treated with fungicides, the advantages of applying the seed treating agent together with seed treating fungicides are threefold:

1) For obtaining the same fungicidal effect as with a fungicide alone, the quantity of fungicide in the mixture with the seed treating agent can be reduced, resulting in beneficial effects on the environment and production costs of crops.

2) The seed treatment with the novel seed treating agent leads to an increase of production under non-ideal growth conditions. This is also the case where early sowing is indicated, such as in case of corn and cotton.

3) The germination characteristics of sensitive seed or seed of bad quality are improved and leads to a higher emergence with strong impact on yield, due to the high correlation between emergence and yield.

Table 1

| Typical Composition of the Seed Treating Agent | |
| --- | --- |
| Component | Quantity as % weight |
| Thiamine mononitrate [1] (micronized [2]) | 50 |
| Surfactant (e.g. Sodium alkylnaphthalene) | 2 |
| Disperging Agent (e.g. Sodium lignosulfonate | 3 |
| Colouring Agent (e.g. Iron Oxide) | 9 |
| Sticking Agent (e.g. Polyethyleneglycol 8000) | 5 |
| Grinding Agent (e.g. Silicondioxyde hydrated | 3 |
| Filling Agent (e.g. Kaolin Clay, type "B-24") | 28 |

1) A typical range for thiamine salt in the composition is actually from 10% - 90%

2) for the definition of "micronized", see Table 2

Table 2

| Particle Size of the Seed Treating Agent and Commercial Thiamine Formulations | | |
| --- | --- | --- |
| | Micronized Formulation (%) | Commercial Formulation (%) |
| Average Particle Size | $<20.0\mu$ | $> 120\mu$ |
| Average Surface | $> 2$ m$^2$/cc | $< 0.2$ m$^2$/cc |

For the purpose of the present invention, the term micronized should relate to an average particle size of $\leq 50\ \mu$, in particular $\leq 20\ \mu$ of the thiamine salt. Such particle size is obtainable by treating the thiamine salt with the appropriate means, e.g. pin-type mills, or even spray drying, etc.

Application form of the micronized seed treating agent:

The seed treating agent is conveniently applied to the seed before planting in concentrations of, conveniently 0.001 - 10g/kg, preferably 0.3-4 g/kg of seed. The seed can be dressed by making a slurry of the agent and treating the seed conveniently in a seed treating machine with the slurry until a homogenous covering of the seed is achieved. The seed treating agent can also be applied in dry form as a powder together with a sticking agent, or it can be used for soaking the seed or treating the seed in a fluidized bed. Combining this agent with commercially available, seed treating, non-bactericidal fungicides against pathogenic fungi, preferably captan, metalaxyl, thiram or thiobendazol, can be done by mixing the fungicide and the seed treating agent to a homogenous product before it is applied to the seed. The actual concentration of the fungicides applied should be according to local practice and is thus in the order of ca. 1-10 g/kg seed, preferably ca. 2-4 g/kg. It is also possible to apply the fungicide before or alter treating the seed with the seed treating agent.

The treated seed can finally be used according to standard agricultural practice.

The vitamin B$_1$ salts conveniently used are the nitrate, the sulfate, the hydrochloride, the hydrobromide, the phosphate, and, preferably, the mono nitrate.

The invention is demonstrated by the following examples:

Example 1

Effect of a Seed Treating Agent alone and in Combination with Captan on Emergence of Dry Beans, Phaseolous vulgaris, in Italy

A field trial with dry beans, phaseolous vulgaris, var. Montebianco was set up at Zimella, Italy in a standard split-plot design (Plot size: 10 $m^2$) with 4 replications, 4 dosages of the seed treating agent (A), the mononitrate, and with/without fungicide treatment. Captan was applied at the locally recommended dosage (i.e. 4 g/kg seed) before treating the seed with the seed treating agent. The seed treating agent was applied by making a slurry of the product with a few drops of milk and the seed then dressed in a commercial seed dressing machine. Soil and climatic characteristics of the trial site are given in Table 3. The objective of this trial was to show the effect of the seed treating agent on the emergence of dry beans. Table 4 shows the obtained results.

## Table 3: Ecoclimatic Characteristics of the Trial Site

Soil Characteristics:

| | |
|---|---|
| Sand (%) | 82 |
| Silt (%) | 12 |
| Clay (%) | 6 |
| Organic Matter (%) | 1.4 |
| pH ($H_2O$) | 7.5 |

Weather Conditions:

Average Temperature (°C), during Germination : 18.9

Early Growth : 19.1

Total Precipitation (mm) during Germination:14 +40 (irrigated)

Early Growth: 90

Germination=1-15; Early Growth=16-30 days after planting

Table 4

| Emergence of Dry Beans at Zimella, Italy when treated with the Seed Treating Agent of Table 1 alone or in Combination with the Fungicide Captan (Number of emerged Seedlings per m2) | | | | |
|---|---|---|---|---|
| Concentration of the Seed treating agent (A) (g/kg of seed) | | | | |
| | 0 | 0.3 | 1.0 | 3.0 |
| Fungicide treated, i.e.(A) + (B) present | 59 | 77 | 77 | 64 |
| Without Fungicide, i.e. component (B) is absent | 14 | 29 | 15 | 10 |

The table shows, that fungicide treatment alone increases emergence by 320%; the treatment with the seed treating agent increases emergence (at the dosage of 0.3 g/kg) by 107%. The combination of the seed treating agent with fungicide treatment increases germination by 450%.

Example 2

4

Effect of the Seed Treating Agent in Combination with Captan on Grain yield Dry Beans, Phaseolous vulgaris, in Italy

A field trial with dry beans, phaseolous vulgaris, var. Montebianco was set up at Mompiano, Italy in a standard split-plot design (Plot size: 10 m²) with 4 replications, 4 dosages of the seed treating agent (A) and with/without fungicide treatment. Captan was applied at the locally recommended dosage (see Example 1)-before treating the seed with the seed treating agent. The seed treating agent was applied by making a slurry of the product with some drops of milk and the seed dressed in a commercial seed dressing machine. Soil and climatic characteristics of the trial site are given in Table 5. The objective of this trial was to show the effect of the seed treating agent on grain yield of dry beans. Table 6 shows the obtained results.

## Table 5: Ecoclimatic Characteristics of the Trial Site

Soil Characteristics:

| | |
|---|---|
| Sand (%) | 54 |
| Silt (%) | 20 |
| Clay (%) | 26 |
| Organic Matter (%) | 2.9 |
| pH (H$_2$O) | 7.6 |

Weather Conditions:

| Average Temperature (°C), during | Germination: | 18.6 |
|---|---|---|
| | Early Growth: | 19.5 |
| | Development: | 22.3 |
| | Flowering: | 23.7 |
| | Pod Filling: | 22.6 |
| | Maturity: | 23.6 |
| Total Precipitation (mm), during | Germination: | 12 |
| | | +40 (irrigated) |
| | Early Growth: | 92 |
| | Development: | 11 |
| | Flowering: | 38 |
| | Pod Filling: | 2 |
| | Maturity: | 40 |

Germination=1-15; Early Growth=16-30; Development (i.e. Growth) =31-40;
Flowering=41-55; Pod Filling=56-75; Maturity=76-90 days after planting;

Table 6

| Grain Yield of Dry Beans at Mompiano, Italy when treated with the Seed Treating Agent of Table 1 alone and in Combination with the Fungicide Captan (kg/ha) | | | | |
|---|---|---|---|---|
| | Concentration of the Seed treating agent (g/kg of seed) | | | |
| | 0 | 0.3 | 1.0 | 3.0 |
| Fungicide treated | 735 | 854 | 843 | 1010 |
| Without Fungicide | 705 | 915 | 908 | 693 |

The table shows, that fungicide treatment alone increases yield by 4% [indicating a pronounced effect of the treatment with the combination]; the treatment with the seed treating agent increases yield (at the dosage of 0.3 g/kg) by 30%. The combination of the seed treating agent with fungicide treatment increases grain yield by 43% (at the dosage of 3.0 g/kg).

Example 3

Effect of the Seed Treating Agent in Combination with Benomyl on Emergence of Beans, Phaseolous vulgaris, in Switzerland

A microplot-type field trial with green beans, phaseolous vulgaris, var. Clyde was setup at Dielsdorf, Switzerland in a randomized complete block design (Plot size: 9 m$^2$) with 6 replications, 2 dosages of the seed treating agent (A) with and without fungicide treatment. Benomyl was applied at the locally recommended dosage (see Example 1) as a mix with the seed treating agent. The seed treating agent was applied by making a slurry of the product with a few drops of water and the seed dressed in an experimental seed dressing machine. Soil and climatic characteristics of the trial site are given in Table 7. The objective of this trial was to show the effect of the seed treating agent on emergence of green beans. Table 8 shows the obtained results.

_____

**Table 7: Ecoclimatic Characteristics of the Trial Site**

_____

**Soil Characteristics:**

| | |
|---|---|
| Sand (%) | 19 |
| Silt (%) | 35 |
| Clay (%) | 46 |
| Organic Matter (%) | 5.1 |
| pH (H$_2$O) | 7.6 |

**Weather Conditions:**

| Average Temperature (°C), during | Germination: | 15.4 |
|---|---|---|
| | Early Growth: | 16.7 |
| | Development: | 19.9 |
| Total Precipitation (mm), during | Germination: | 34 |
| | Early Growth: | 68 |
| | Development: | 85 |

_____

Germination=1-15; Early Growth=11-30; Development=31-60 days after planting;

6

---

Table 8: Emergence of Green Beans at Dielsdorf/ Switzerland, when treating Seed with the Seed Treating Agent of Table 1 alone and as a Mix with Benomyl

---

Emergence (Plants/$4.5m^2$):

| | |
|---|---|
| Control | 115 |
| Seed treating agent alone | 124 |
| Benomyle alone | 118 |
| Mix of Benomyl and Seed treating agent | 132 |

---

**Emergence at 10 days after planting**

The table shows, that fungicide treatment alone increases emergence by 3%; the treatment with the seed treating agent increases emergence by 8% (at the dosage of 2g/kg). The combination of the seed treating agent with fungicide treatment increases emergence by 15%.

Example 4

Effect of the Seed Treating Agent in Combination with Apron on Yield of Vining Peas, Pisum sativum, in United Kingdom

A field trial with vining peas, pisum sativum, var. Puget was set up at Gloucestershire as a strip trial (Plot size: 58 $m^2$) with 5 replications, 1 control, 1 fungicide treatment at the locally recommended dosage (3 g/kg), 1 treatment with the seed treating agent (A) at a dosage of 2g/kg and 1 treatment with a mix of the fungicide and the seed treating agent. The fungicide Apron, as used in this trial contains metalaxyl, thiabendazole and thirame (ca. 20,6%:10,6%:8,8%). It was applied before treating the seed with the seed treating agent. The seed treating agent was applied by making a slurry of the product with some drops of water and the seed dressed in a commercial seed dressing machine. Soil and climatic characteristics of the trial site are given in Table 9. The objective of this trial was to show the effect of the seed treating agent on dry matter yield of vining peas. Table 10 shows the obtained results.

---

Table 9: Ecoclimatic Characteristics of the Trial Site

---

Soil Characteristics:
   Sand (%)

| Silt (%) | 56 |
| Clay (%) | 24 |
| Organic Matter (%) | 5.0 |
| pH ($H_2O$) | 7.4 |

**Weather Conditions:**

| Average Temperature (°C), during | Germination: | 10.7 |
| | Early Growth: | 12.7 |
| | Development: | 15.9 |
| | Flowering: | 17.0 |
| | Pod Filling: | 21.2 |
| Total Precipitation (mm), during | Germination: | 9 |
| | Early Growth: | 30 |
| | Development: | 48 |
| | Flowering: | 28 |
| | Pod Filling: | 0 |

_ _ _ _ _ _ _ _ _ _ _ _ _ _ _ _ _ _ _ _ _ _ _ _ _ _ _ _ _ _ _ _ _ _ _ _ _ _ _ _ _ _ _

Germination=1-15; Early Growth=16-40; Development=41-65; Flowering=66-80; Pod Filling=81-90 days after planting;

Table 10

| Dry Matter Yield of Vining Peas at Gloucester/shire/United Kingdom when treated with the Seed Treating Agent of Table 1 alone, treated with a Fungicide and in Combination with the Fungicide Apron (kg/ha) | | |
|---|---|---|
| Control | 760 | |
| Seed treating agent alone | 903 | |
| Fungicide alone | 842 | the synergism is not particularly evident in this particular case, because of long dry periods |
| Combination of Fungicide and Seed treating agent | 944 | |

The table shows, that fungicide treatment alone increases yield by 11%; the treatment with the seed treating agent increases yield (at the dosage of 2.0 g/kg) by 19%. The combination of the seed treating agent with fungicide treatment increases grain yield by 25%.

Example 5

Effect of the Seed Treating Agent in Combination with Apron on Grain yield of Green Beans, Phaseolous vulgaris, in United Kingdom

A field trial with green beans, phaseolous vulgaris, var. Nerina was set up at Norfolk as a strip trial (Plot size: 116 m$^2$) with 5 replications, 1 control, 1 fungicide treatment at the locally recommended dosage (3 g/kg), 1 treatment with the seed treating agent (A) at a dosage of 2g/kg and 1 treatment with a mix of the fungicide and the seed treating agent. The fungicide Apron (see Example 4), as used in this trial is a composition of metalaxyl, thiabendazol and thiram. It was applied before treating the seed with the seed treating agent. The seed treating agent was applied by making a slurry of the product with some drops of water and the seed dressed in a commercial seed dressing machine. Soil and climatic characteristics of the trial site are given in Table 11. The objective of this trial was to show the effect of the seed treating agent on dry matter yield of green beans. Table 12 shows the obtained results.

8

Table 11: Ecoclimatic Characteristics of the Trial Site

Soil   Characteristics:
        Sand (%)                    71
        Silt (%)                    19
        Clay (%)                    10
        Organic Matter (%)           1.4
        pH (H$_2$O)                  6.8

Weather Conditions:
Average Temperature (°C), during    Germination:     16.5
                                    Early Growth:    16.2
                                    Development:     17.9
                                    Flowering:       17.1
                                    Pod Filling:     18.3
Total Precipitation (mm), during    Germination:     14
                                    Early Growth:    60
                                    Development:     0 +30 (irrigated)
                                    Flowering:       27
                                    Pod Filling:     14

Germination=1-15; Early Growth=16-30; Development=31-45; Flowering=46-60; Pod Filling=61-70 days after planting;

Table 12

| Dry Matter Yield of Green Beans at Norfolk/United Kingdom when treated with the Seed Treating Agent of Table 1 alone, treated with a Fungicide and in Combination with the Fungicide Apron (kg/ha) | |
| --- | --- |
| Control | 4762 |
| Seed treating agent alone | 5899 |
| Fungicide alone | 4925 |
| Combination of Fungicide and Seed treating agent | 5681 |

The table shows, that fungicide treatment alone increases yield by 3%; the treatment with the seed treating agent increases yield (at the dosage of 2.0 g/kg) by 23%. The combination of the seed treating agent with fungicide treatment increases grain yield by 18%, see also the comments for Example 4.

Example 6

Effect of the Seed Treating Agent in Combination with Thiram on Grain yield of Green Beans, Phaseolous vulgaris, in Germany

A field trial with green beans, phaseolous vulgaris, var. Goldfisch was set up at Mascherode as a strip trial (Plot size: 116 m$^2$) with 5 replications, 1 control, 1 fungicide treatment at the locally recommended dosage (2 g/kg), 1 treatment with the seed treating agent (A) at a dosage of 2g/kg and 1 treatment with a mix of the fungicide and the seed treating agent. The fungicide was applied before treating the seed with the seed treating agent. The seed treating agent was applied by making a slurry of the product with some drops of water and the seed dressed in a commercial seed dressing machine. Soil and climatic characteristics of the trial site are given in Table 13. The objective of this trial was to show the effect of the seed treating agent on dry matter yield of green beans. Table 14 shows the obtained results.

---

**Table 13: Ecoclimatic Characteristics of the Trial Site**

---

Soil Characteristics:

| | |
|---|---|
| Sand (%) | 52 |
| Silt (%) | 40 |
| Clay (%) | 8 |
| Organic Matter (%) | 1.3 |
| pH ($H_2O$) | 7.4 |

Weather Conditions:

| Average Temperature (°C), during | Germination: | 12.6 |
|---|---|---|
| | Early Growth: | 14.3 |
| | Development: | 16.9 |
| | Flowering: | 15.9 |
| | Pod Filling: | 16.7 |
| Total Precipitation (mm), during | Germination: | 11 |
| | Early Growth: | 48 |
| | Development: | 10 |
| | Flowering: | 27 |
| | Pod Filling: | 2 |

---

Germination=1-15; Early Growth=16-30; Development=31-45; Flowering=46-60; Pod Filling=61-70 days after planting;

Table 14

| Dry Matter Yield of Green Beans at Mascherode/Germany when treated with the Seed Treating Agent of Table 1 alone, treated with a Fungicide and in Combination with the Fungicide Thiram (kg/ha) | |
|---|---|
| Control | 1699 |
| Seed Treating Agent alone | 1829 |
| Fungicide alone | 1291 |
| Combination of Fungicide and Seed Treating Agent | 1613 |

The table shows, that the fungicide treatment alone depresses yield by 24%; the treatment with the seed treating agent increases yield (at the dosage of 2.0 g/kg) by 8%. The combination of the seed treating agent with the fungicide brings the yield level back to about the control level, see also the comments for Example 4.

Example 7

Effect of the Seed Treating Agent on Germination of Cotton, Gossypium ssp., in the USA

A laboratory trial with cotton, gossypium ssp., was set up at the Cornell University in New York/USA according to the AOSA Rules of Testing Seeds at 4 replications, each with 50 seeds and 4 dosages of the seed treating agent (A).

The seed treating agent was applied by making a slurry of the product with some drops of water and the seed dressed in a commercial seed dressing machine. The objective of this trial was to show the effect of the seed treating agent on germination and dry weight of root and shoots of 12 days old seedlings. Table 15 shows the obtained results.

Table 15

| Germination Rate, Dry Weight of Root and Shoots of Cotton, when treated with the Seed Treating Agent of Table 1 | | | | |
|---|---|---|---|---|
| | Treatment (g/kg seed) | | | |
| | 0 | 0.3 | 1.0 | 3.0 |
| 1.Germination(%) | 66 | 72 | 80 | 88 |
| 2. Dry weight of Roots (g/plant) | 0.27 | 0.31 | 0.33 | 0.37 |
| 3. Dry weight of Shoots (g/plant) | 1.6 | 1.7 | 1.9 | 2.2 |

The table shows, that the seed treating agent increases germination, dry weight of roots and shoots at the highest dosage of 3g/kg by 33%, 37% and 37% respectively for germination, root and shoot weight. So in this example, the seed treating agent alone supported the very sensitive period [-sensitive to any influence of the environment, such as rain and attack by fungi, etc.] of germination and early growth of cotton.

Example 8

Effect of the Seed Treating Agent in Combination with Captan on Biomass Production of Soybean, Glycine max., in Italy

A field trial with soybean, glycine max, var. Sakai was set up at Caleppio, Italy in a standard split-plot design (Plot size: 10 m$^2$) with 4 replications, 4 dosages of the seed treating agent (A) and with/without fungicide Captan treatment. Captan was applied at the locally recommended dosage before treating the seed with the seed treating agent. The seed treating agent was applied by making a slurry of the product with some drops of milk and the seed dressed in a commercial seed dressing machine. Soil and climatic characteristics of the trial site are given in Table 16. The objective of this trial was to show the effect of the seed treating agent on biomass production of soybean. Table 17 shows the obtained results.

---

## Table 16: Ecoclimatic Characteristics of the Trial Site

---

Soil Characteristics:
| | |
|---|---|
| Sand (%) | 67 |
| Silt (%) | 21 |
| Clay (%) | 12 |
| Organic Matter (%) | 2.2 |
| pH ($H_2O$) | 6.3 |

Weather Conditions:

| Average Temperature (°C), during | Germination: | 19.9 |
|---|---|---|
| | Early Growth: | 20.1 |
| | Development: | 24.0 |
| | Flowering: | 24.5 |
| Total Precipitation (mm), during | Germination: | 118 |
| | Early Growth: | 30 |
| | Development: | 26 |
| | Flowering: | 60 |

---

Germination=1-15; Early Growth=16-30; Development=31-45; Flowering=46-70 days after planting;

Table 17

| Biomass Production of Soybean at Caleppio, when treated with the Seed Treating Agent of Table 1 alone and in Combination with the Fungicide Captan (g/10 plants) | | | | |
|---|---|---|---|---|
| | Concentration of the Seed treating agent (g/kg of seed) | | | |
| | 0 | 0.3 | 1.0 | 3.0 |
| Fungicide treated | 458 | 510 | 485 | 488 |
| Without Fungicide | 446 | 531 | 501 | 408 |

The table shows, that fungicide treatment alone does not increase biomass of soybean; the treatment with the seed treating agent increases biomass (at the dosage of 0.3 g/kg) by 19%. The combination of the seed treating agent with fungicide increases biomass by 14%, as can be seen from Table 16, the conditions were extreme and the fungicide could thus not develop its activity.

Example 9

Effect of the Seed Treating Agent (Thiamine as the sulfate salt) on germination and yield of vining peas, pisum sativum in the UK

A field trial with vining peas, var. Banff was set up at Rush Pits, Wellesbourne as a randomized block trial (plot size: $3m^2$) with 3 replications, 1 control, 1 treatment with the seed treating agent (A) at a dosage of 2g/kg of seed.

The seed treating agent was applied by making a slurry of the product with some drops of water and the seed dressed in a commercial seed dressing machine. Soil and climatic characteristics of the trial site are given in Table 18. The objective of the trial was to show the effect of the seed treating agent with the active ingredient being vitamin B1-sulfate, on the dry matter yield of vining peas. Table 19 shows the obtained results.

---

**Table 18:     Ecoclimatic Characteristics of the trial site**

---

**Soil characteristics:**

| | |
|---|---|
| Sand (%): | 59.3 |
| Silt (%) | 22.7 |
| Clay (%) | 18.0 |
| Organic matter (%) | 2.3 |
| pH ($H_2O$) | 7.1 |

**Weather conditions:**

| Average temperature (°C) | | |
|---|---|---|
| | Germination: | 18.2 |
| | Early Growth: | 20.0 |
| | Development: | 17.7 |
| | Flowering: | 14.9 |
| | Pod Filling: | 14.5 |

| Total Precipitation (mm) during | | |
|---|---|---|
| | Germination | 27 |
| | Early growth: | 12 |
| | Development: | 44 |
| | Flowering: | 51 |
| | Pod Filing: | 0 |

---

Germination = 1-15; Early Growth = 16-30; Development (i.e. Growth) = 31-40; Flowering = 41-55; Pod Filling = 56-75 days after planting

Table 19

| Stand count and pea yield at Rush Pits/Wellesbourne with the seed treating agent of Table 1 having as active ingredient vitamin B1 sulfate | | |
|---|---|---|
| | Control | Seed treating agent (vitamin B1-sulfate) |
| Stand count (Plants/m$^2$) | 19 | 29 |
| Pea yield (kg/ha) | 736 | 957 |

The table shows, that the stand count is increased by 54%, when the pea seed is treated with the seed treating agent, containing thiamine as a sulfate salt and the pea yield is subsequently increased by 30% under climatic conditions which can be described as relatively wet during germination.

**Claims**

1. Seed treating agent containing a vitamin $B_1$ salt (A) in micronized form, and, optionally, a non-bactericidal fungicide (B).

2. Seed treating agent according to claim 1, wherein component A is used in an average particle size of ≦50 microns, preferably ≦20 microns.

3. Seed treating agent according to claim 1 or 2, wherein the concentration of (A) is from 0,001 to 10 g/kg seed, and of (B) is ca. 0,01-100g, in particular ca. 1-10 g active ingredient/kg seed.

4. Seed treating agent according to claim 1, 2 or 3, where in the salt is the mononitrate, sulfate, hydrochloride or hydrobromide.

5. Seed treating agent according to any one of claims 1 to 4, wherein a fungicide of the thiocarbamate type, preferably thiram is present.

6. Seed treating agent according to any one of claims 1 to 4, wherein (B) is captan, metataxyl, benomyl or thiobendazol.

7. Process for treating seeds, e.g. for increasing plant growth and/or yield, comprising using a seed treating agent according to any one of claims 1 to 6.

European Patent
Office

EUROPEAN SEARCH REPORT

Application Number

EP   92 10 9746

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-500 284 (I.G.FARBENINDUSTRIE AG) 6 February 1939 --- | | A01N43/78 //(A01N43/78, 25:00, 47:04, 47:38, 37:46, 43:78, 47:26) |
| A | FR-A-876 007 (H.A.AMLONG) 13 July 1942 --- | | |
| A | CENTRAL PATENTS INDEX, BASIC ABSTRACTS JOURNAL Section Ch, Week 8026, 20 August 1980 Derwent Publications Ltd., London, GB; Class C, AN 45982C & SU-A-697 123 (VILN UNIV) 20 November 1979 * abstract * ----- | | |
| | | | **TECHNICAL FIELDS SEARCHED (Int. Cl.5 )** |
| | | | A01N |

The present search report has been drawn up for all claims

| Place of search | Date of completion of the search | Examiner |
|---|---|---|
| THE HAGUE | 27 OCTOBER 1992 | DONOVAN T.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)